# EUROPEAN PATENT SPECIFICATION

(11) **EP 2 152 510 B1**
(45) Date of publication and mention of the grant of the patent: **09.03.2011**
(21) Application number: 08750495.7
(22) Date of filing: 30.04.2008
(51) Int. Cl.: B32B 7/12, B32B 27/30, B32B 27/36, B65D 65/02, B65D 65/40, B65D 65/46, B65D 75/26, B65D 81/20

(54) **BIODEGRADABLE MULTILAYER POLYMERIC FILMS AND PACKAGES PRODUCED THEREFROM**
BIOLOGISCH ABBAUBARE, MEHRLAGIGE POLYMERFOLIEN UND DARAUS HERGESTELLTE VERPACKUNGEN
FILMS POLYMÈRES MULTICOUCHES BIODÉGRADABLES ET EMBALLAGES PRODUITS À PARTIR DE CES FILMS

(30) Priority: 30.04.2007 GB 0708327
(43) Date of publication of application: 17.02.2010
(73) Proprietor: Evap Enviromentals Limited, Tadcaster, North Yorkshire LS24 8EW (GB)
(72) Inventor: TWIST, Cyril, Gloucester GL17 9BS (GB)
(74) Representative: Wightman, David Alexander
(86) International application number: PCT/GB2008/001516
(87) International publication number: WO 2008/132488

(56) References cited:
- EP-A- 0 153 215
- WO-A-01/68157
- WO-A-98/09812
- WO-A-2004/052646
- WO-A-2007/113077
- AT-B- 410 079
- "Viskosimetrie. Messung des Viskositaet mit dem Kugelfalvisskosimeter nach Hoeppler" DIN 53015,, no. 53015, 1 February 2001 (2001-02-01), pages 1-16, XP007913257

## Description

This invention concerns polymeric films, for example for use in packaging, and especially for packaging fresh plant materials, for example under controlled atmosphere conditions.

The packaging of fresh plant materials under controlled atmosphere conditions has been widely used hitherto to extend the shelf life of a wide range of fresh produce, for example potatoes, mushrooms, strawberries, sweetcorn, grapes, bananas etc.

Although hand made packs of biodegradable polyvinyl alcohol have successfully been used to extend the shelf lives of such plant materials, problems have been encountered when packs made from polyvinyl alcohol are made in high speed packaging machines.

One proposal for reducing these problems with high speed packaging machines has been to use films in the form of coextrudates of a polyvinyl alcohol having a relatively high solubility in water and relatively high melting temperature with a polyvinyl alcohol having a relatively low solubility in water and a relatively low melting temperature. By suitably selecting the difference in melting temperatures between the polyvinyl alcohols forming the inner and outer surfaces of the polyvinyl alcohols such coextrudates can enable such films to be used on conventional high speed packaging machinery. However, the low temperature solubility of the inner surface of such films can lead to their breakdown when they are exposed to high humidity and wetness within packs when the packs contain fresh produce.

Another problem with films produced from polyvinyl alcohols alone is their almost zero moisture barrier properties. Whilst this can be advantageous in some instances, for example where it is important to keep the contents of a package dry, it can also lead to unacceptable weight loss of the packaged product. It is therefore desirable to be able to provide films with different water vapor transmission rates for use in different end uses of the films, for example high water vapor transmission rates for packs of products with high respiration rates and lower water vapor transmission rates for products with lower water vapor transmission rates.

Unlike commercially available eco-friendly films such as cellophane (or regenerated cellulose) and those made from polylactic acid, blown polyvinyl alcohol films are relatively tough and flexible, and currently such polyvinyl alcohol films are probably the only eco-friendly option for making films with high gloss and clarity for packaging heavy weight products, for example potatoes, onions, parsnips, etc. It is therefore desirable that films for use in packaging fresh plant materials have a substantial polyvinyl alcohol content. However, they also generally need to be heat sealable.

The problem with providing polyvinyl alcohol films with heat sealability is that sealing is desirably achieved using commercially available materials that are biodegradable and compostable, that are thermoplastic and suitable for food contact use, that have a low melting temperature, and that are able to withstand high humidity such as is encountered within packages made from the films.

Polylactic acid has properties which make it suitable as a heart sealable layer for polyvinyl alcohol films except that polylactic acid generally has relatively poor compatibility with polyvinyl alcohol. It has, therefore, been proposed hitherto to use tie layers to improve bonding of polylactic acid layers to layers of polyvinyl alcohol to form multi-layered packaging films. However, materials which have been proposed as being suitable for forming tie layers between polylactic acid and polyvinyl alcohol are in general not eco-friendly. Furthermore, the use of such hitherto proposed tie layers complicates the process for producing the packaging films themselves, four example the need to use extrusion coating techniques to form the tie layers, thereby adding to the cost of the resulting films. In addition, conventional polyolefin based tie layers generally present high barriers to water vapor.

AT 410 079 and WO 98/09812 disclose flexible biodegradable packaging films with a central polyvinyl slcohol gas barrier layer and two outer polylactic acid layers that serve to protect the polyvinyl layer against moisture.

According to the present invention there are provided polymeric films as defined in claim 1.

The polylactic acid, or first, layer generally enables the moisture barrier properties of films of the present invention to be varied, and particularly the moisture breathability of the films, for example by varying the thicknesses of the polylactic acid layer.

Films in accordance with the present invention can be used as environmentally friendly packaging materials having good impact strengths combined with high gloss and clarity, and they can be used to package relatively heavy loads of fresh vegetable produce.

The use of polylactic acid to form one surface of the films, combine with the presence of a layer of polyvinyl alcohol as an internal layer within the films, can serve to increase the resistance of the internal surfaces of packages made from the films to resist the effects of high humidity and wet produce, for example potatoes, carrots etc, within the packs.

The intermediate layer or layers between the layer of polylactic acid and the layer of polyvinyl alcohol serve to provide a tie between the layer of polylactic acid and the layer of polyvinyl alcohol. They can be formed separately from the layers of polylactic acid and polyvinyl alcohol, but they are preferably formed simultaneously with the layers of polylactic acid and polyvinyl alcohol, for example by simultaneous extrusion.

Films in accordance with the present invention can consist of one outer layer formed substantially from polylactic acid and the other outer layer formed substantially of polyvinyl alcohol, with the intermediate layer or layers made of the blend, the layer of the blend serving as tie layers between the first and second outer layers. However, the layer of polyvinyl alcohol preferably has one or more further layers thereon, whereby the polyvinyl alcohol layer becomes an internal layer of the films. In general, the intermediate layer or layers formed from mixtures of polylactic acid and polyvinyl alcohol then serve as tie layers between outer layers of polylactic and internal layers of polyvinyl alcohol.

The blends can also be used as tie layers between the second layers, made from polyvinyl alcohol, and further layers of the films on the polyvinyl alcohol layers.

The polylactic acid used for films of the present invention preferably has a seal initiating temperature of at least 80°C. This can enable outer layers made from polylactic acid to be heat sealed to suitable surfaces. Polylactic acid can be used on its own to produce heat sealable surfaces but it can also be used in admixture with other polymeric materials, for example polyvinyl alcohol.

The polyvinyl alcohol used for films of the present invention preferably has a degree of hydrolysis of from 79 to 92%, more preferably from 80 to 88%. It also preferably has a viscosity of from 3 to 32, and more preferably from 5 to 10mPa.S (DIN53015).

The polyvinyl alcohol layer, or second layer, of films of the present invention can contain polylactic acid. However, they are preferably substantially devoid thereof. When mixtures of polyvinyl alcohol and polylactic acid are used, these layers preferably contain not more than 20%, more preferably not more than 10%, by weight of polylactic acid. The inclusion of polylactic acid to the polyvinyl alcohol layer can provide such layers with peelability. However, peelability can also be achieved by the inclusion of layers made from blends of cellulose derivatives and polylactic acid.

The amount of polylactic acid in the intermediate layer is preferably reduced to a maximum of 90% by weight when polylactic acid is included in the said second layer.

Intermediate layers of films in accordance with the present invention consist of blends of polylactic acid with polyvinyl alcohol. The polylactic acid for the intermediate layers is preferably as hereinbefore described for use in said first layers of the films, and the polyvinyl alcohol is preferably as hereinbefore described for use in said second layers of the films.

The intermediate layers preferably consist of blends of from 2 to 90% by weight of polylactic acid, and from 98 to 10% by weight of polyvinyl alcohol.

When a single intermediate layer is used between the polylactic acid and polyvinyl alcohol layers, it preferably contains at least 20% by weight, more preferably from 40 to 95% by weight, of polyviny alcohol, and at least 2% by weight, more preferably from 60 to 5% by weight, of polylactic acid, the weight of polylactic acid preferably being reduced to a maximum of 90% by when the said second layer contains polylactic acid.

When two or more intermediate layers of blends of polylactic acid and polyvinyl alcohol are present between the polylactic acid layer and the polyvinyl alcohol layer, the relative amounts of polylactic acid and polyvinyl alcohol in the respective intermediate layers are preferably selected so that the amount of polylactic acid therein decreases from layer to adjacent layer and amount of polyvinyl alcohol increases from layer to adjacent layer starting with the layer of polylactic acid.

The use of differing amounts of polylactic acid and polyvinyl alcohol in the various intermediate layers between the polylactic acid layer and the polyvinyl alcohol layer can serve to reduce curl, cockling and general film distortion of the films.

When three intermediate layers are present between the said first layer of polylactic acid and the said second.layer of polyvinyl alcohol, the intermediate layer nearest to the polyvinyl alcohol layer preferably contains from 45 to 90% of polyvinyl alcohol and from 10 to 55% of polylactic acid, the layer nearest to the polylactic acid layer preferably contains from 90 to 45% of polylactic acid and from 10 to 55% of polyvinyl alcohol, and the intermediate layer between these two intermediate layers preferably contains intermediate amounts of polylactic acid and polyvinyl alcohol, for example approximately 50% of both.

Although films in accordance with the present invention can have one outer layer of polylactic acid and a second outer layer of polyvinyl alcohol, optionally containing polylactic acid, with one or more intermediate layers, it is generally preferred to include one or more further lasers on one or other of the said outer layers, and particularly on the said second layer. Such further layers are preferably included to protect the polyvinyl alcohol layers by sandwiching the polyvinyl alcohol layers between the polylactic acid/polyvinyl alcohol tie layer and the said further layer or layers. This can be used with advantage when films of the present invention are used to package plant materials.

When present, the further polymeric layer or layers are preferably biodegradable, thereby contributing to the biodegradability of the films themselves resulting from the presence of the polylactic acid and polyvinyl alcohol layers.

Examples of further polymeric layers which can be used include layers of polylactic acid or of cellulose or its derivatives, for example cellulose esters, preferably cellulose acetate.

When such further layer or layers are present they are preferably tied to the polyvinyl alcohol layer by a blend of polylactic acid and polyvinyl alcohol, for example as hereinbefore described between he polylactic acid and polyvinyl alcohol layers.

Films in accordance with the present invention can contain one or more additives in one or more of their layers, for example processing aids, antistatic agents, slip agents or antiblock agents. Furthermore, plasticisers can be included in one or more of the layers, for example to provide a difference in sealing temperature between opposite surfaces of the films.

Films in accordance with the present invention can be of various thicknesses for example they can have a total thickness of from 15 to 250µm for use as packaging films, or much thicker, for example from 200 to 2000µm thick for use as packaging trays.

The various layers of films in accordance with the present invention will in general be of different thicknesses. Outer layers formed from polylactic acid, preferably have thicknesses of from 3 to 50pm, layers made from of blends of polylactic acid and polyvinyl alcohol preferably have thicknesses of from 3 to 50µm, and layers of polyvinyl alcohol in films of the present invention preferably are from to 150µm thick.

Films in with the present invention can be produced using known methods, for example extrusion, preferably including blowing, casting or sheeting. It is generally preferred to compound mixtures of polylactic acid and polyvinyl alcohol prior to extruding them to form individual layers of films of the present invention.

Films in accordance with the present invention can in general be used in direct contact between the polylactic containing outer layers and foodstuffs, and problems with undesirable migration which occurs from direct contact with polyvinyl alcohol can as a result be reduced to acceptable limits or avoided.

The moisture vapor barrier properties of films of the present invention can be altered by varying the thickness of polylactic acid containing layers which are present in the films. The results shown in the following Table indicate that increasing the amount of polyvinyl alcohol in the blends serves to improve bonding of the outer layers of the films to the intermediate layers. They also indicate that increasing the amount of polyvinyl alcohol in the intermediate layer improved the bond to the polyvinyl alcohol layer and that increasing the polyvinyl alcohol content of the intermediate layer decreased bonding to the polylactic acid layer.

Packages in accordance with the present invention can take conventional forms, for example packages formed by sealing the films to themselves or in the form of containers of other materials, which are preferably themselves biodegradable, with films of the present invention then acting as lids or sealing membranes for the containers.

Packages in accordance with the present invention can be used to store fresh plant materials, for example in a controlled atmosphere.

The following Examples are given by way of illustration only.

### Examples 1

Blends of polylactic acid (referred to as PLA in the following Table) and polyvinyl alcohol (referred to as PVOH in the following Table) were extruded to form individual films which were heat sealed to films made either from polylactic acid with a seal initiation temperature of at least 80°C or from polyvinyl alcohol having high, medium or low water solubility temperatures. The peelability of these films from trays made from polylactic acid was also investigated.

**Table**

| Blend | PVA water solubility temp. (°C) | Bond to PVA | Bond to PLA |
|---|---|---|---|
| 10%PVA/90%PLA | 70 | slight | good |
| 20%PVA/80%PLA | 70 | slight | good |
| 50%PVA/50%PLA | 70 | slight | good |
| 60%PVA/40%PLA | 10 | good | good |
| 65%PVA/35%PLA | <5 | good | good |
| 70%PVA/30%PLA | 20 | good | slight |
| 80%PVA/20%PLA | 20 | good | slight |

### Example 2

A three layer polymeric film was produced by coextruding a first outer layer of polylactic acid, a core layer of a blend of 80% by weight of polylactic acid and 20% by weight of polyvinyl alcohol, and a second outer layer of polyvinyl alcohol, the polyvinyl alcohol of the core and the second outer layers were less than 5°C and 10°C respectively.

The first outer layer was 15µm thick, the core layer was 5µm thick, and the second outer layer was 15µm thick.

### Example 3

A five layered film was produced by extruding through a five layered die, a first outer layer of polylactic acid, a first intermediate layer of the blend of 80% by weight of polyvinyl alcohol and 20% by weight of polylactic acid, a second intermediate layer, or central layer, of polyvinyl alcohol, a third intermediate layer of the blend used for the first intermediate layer, and a second outer layer of 92% by weight of polylactic acid and 8% by weight of an impact modifier which acted as a processing aid.

The first outer layer and the second outer layer were both 10µm thick, the second intermediate layer, or central layer, was 15µm thick, and the first and third intermediate layers were both 5µm thick, the total thickness of the film being 45µm.

The coextruded film had a haze of 4 and a gloss of 78 according to (ASTM D1003), an oxygen transmission rate of 9cm³/m²/day (ASTM F1927-98). The moisture vapor transmission rate of the film was about 250g/m²/day tropical.

The film was used to produce packs of 2.5kg of potatoes made by vertical form fill sealing the film using a crimped heat seal to heat seal the second outer layers of the films to themselves, the packs having a 20% headspace.

The packs satisfactorily survived a drop test in which they were dropped on to a hard surface from a distance of 1m.

### Example 4

A five layered film was produced by extruding through a five layered die, a first outer layer of polylactic acid, a first intermediate layer of the blend of 55% by weight of polyvinyl alcohol and 45% by weight of polylactic acid, a second intermediate layer of a blend of 65% by weight of polylactic acid and 35% by weight of polyvinyl alcohol, a third intermediate layer of polyvinyl alcohol, and a second outer layer of regenerated cellulose.

The first outer layer and the second outer layer were both 10µm thick, the second intermediate layer was 15µm thick, and the first and third intermediate layers were both 5µm thick, the total thickness of the film being 45µm.

## Claims

1. Polymeric films comprising a first layer consisting substantially of polylactic acid, a second layer consisting substantially of polyvinyl alcohol and at least one intermediate layer therebetween, the intermediate layer or layers consisting substantially of a blend of polylactic acid with polyvinyl alcohol.

2. Polymeric films according to claim 1, having a single intermediate layer between the said first layer and the said second layer.

3. Polymeric films according to claim 1, having at least two intermediate layers between the said first layer and the said second layer.

4. Polymeric films according to claim 3, wherein the relative amounts of polylactic acid with polyvinyl alcohol in the said intermediate layers are selected so that the proportion of polylactic acid decreases in successive intermediate layers starting with the intermediate layer adjacent the said first layer.

5. Polymeric films according to any of the preceding claims wherein the said blend or blends each consist of from 2 to 90% by weight of polylactic acid, and from 98 to 10% by weight of polyvinyl alcohol.

6. Polymeric films according to claim 2, wherein the said blend contains from 40 to 95% by weight of polyvinyl alcohol and from 60 to 5% by weight of polylactic acid.

7. Polymeric films according to any of the preceding claims, wherein the polyvinyl alcohol has a degree of hydrolysis of from 79 to 96%.

8. Polymeric films according to any of the preceding claims, wherein the said second layer contains polylactic acid.

9. Polymeric films according to any of the preceding claims, wherein the said first layer forms an outer surface of the films.

10. Polymeric films according to any of the preceding claims, wherein the said first and second layers together form the outer surfaces of the films.

11. Polymeric films according to any of claims 1 to 9, having at least one further layer on the said second layer.

12. Polymeric films according to claim 11, wherein the said at least one further layer on the second layer consists substantially of polylactic acid or wherein the said at least one further layer on the second layer comprises a blend of cellulose derivatives and polylactic acid.

13. Polymeric films according to claim 11, wherein an intermediate layer consisting substantially of a blend of polylactic acid and polyvinyl alcohol is provided between the said second layer and said at least one further layer.

14. Packages comprising an article, for example fresh plant material packaged in a controlled atmosphere, packaged in a film according to any of the preceding claims.

## Patentansprüche

1. Polymerfolien, mit
- einer ersten Schicht, die im wesentlichen aus Polymilchsäure besteht;
- einer zweiten Schicht, die im wesentlichen aus Polyvinylalkohol besteht; und mit
- wenigstens einer Zwischenschicht zwischen diesen beiden Schichten, wobei diese Zwischenschicht oder diese Zwischenschichten im wesentlichen aus einem Blend (bzw. einer Abmischung) aus Polymilchsäure mit Polyvinylalkohol besteht bzw, bestehen,

2. Polymerfolien nach Anspruch 1,
**dadurch gekennzeichnet, dass**
zwischen dieser ersten Schicht und dieser zweiten Schicht eine einzige Zwischenschicht vorhanden ist.

3. Polymerfolien nach Anspruch 1,
**dadurch gekenntzeichnet, dass**
zwischen dieser ersten Schicht und dieser zweiten Schicht wenigstens zwei Zwischenschichten vorhanden sind.

4. Polymerfolien nach Anspruch 3,
**dadurch gekennzeichet, dass**
die relativen Anteile an Polymilchsäure zu Polyvinylalkohol in diesen Zwischenschichten so ausgewählt sind, dass
- ausgehend von der zu dieser ersten Schicht benachbarten Zwischenschicht - der Anteil an Polymilchsäure in nachfolgenden Zwischenschichten abnimmt.

5. Polymerfolien nach einem der vorausgegangenen Ansprüche,
**dadurch gekennzeichnet, dass**
der Blend oder die Blends jeweils bestehen aus 2 bis 90 Gew.-% Polymilchsäure und
98 bis 10 Gew.-% Polyvinylalkohol.

6. Polymerfolien nach Anspruch 2,
**dadurch gekennzeichnet, dass**
dieser Blend 40 bis 95 Gew.-% Polyvinylalkohol und
60 bis 5 Gew.-% Polymilchsäure enthält.

7. Polymerfolien nach einem der vorausgegangenen Ansprüche,
**dadurch gekennzeichnet, dass**
der Polyvinylalkohol einen Hydrolysegrad von 79 bis 96 % aufweist.

8. Polymerfolien nach einem der vorausgegangenen Ansprüche,
**dadurch gekennzeichnet, dass**
diese zweite Schicht Polymilchsäure enthält.

9. Polymerfolien nach einem der vorausgegangenen Ansprüche,
**dadurch gekennzeichnet, dass**
diese erste Schicht eine Außenfläche der Folien bildet.

10. Polymerfolien nach einem der vorausgegangenen Ansprüche,
**dadurch gekennzeichet, dass**
diese erste Schicht die eine Außenfläche der Folien bildet, und
diese zweite Schicht die andere Außenfläche der Folien bildet.

11. Polymerfolien nach einem der Ansprüche 1 bis 9,
**dadurch gekennzeichnet, dass**
auf dieser zweiten Schicht wenigstens eine weitere Schicht vorhanden ist.

12. Polymerfolien nach Anspruch 11,
**dadurch gekennzeichnet, dass**
diese wenigstens eine weitere Schicht auf dieser zweiten Schicht im wesentlichen aus Polymilchsäure besteht oder
diese wenigstens eine weitere Schicht auf dieser zweiten Schicht einen Blend aus Cellulose-Derivaten mit Polymilchsäure enthält,

13. Polymerfolien nach Anspruch 11,
**dadurch gekenntzeichnet, dass**
zwischen dieser zweiten Schicht und dieser wenigstens einen weiteren Schicht eine Zwischenschicht vorhanden ist, die im wesentlichen aus einem Blend aus Polymilchsäure mit Polyvinylalkohol besteht.

14. Verpackungen,
die einen Gegenstand enthalten,
wie beispielsweise frisches pflanzliches Material innerhalb einer kontrollierten Gasatmosphäre,
**dadurch gekennzeichnet, dass**
dieser Gegenstand innerhalb einer Folie nach einem der vorausgegangenen Ansprüche verpackt ist.

## Revendications

1. Films polymères comprenant une première couche constituée essentiellement d'acide polylactique, une deuxième couche constituée essentiellement d'alcool polyvinylique et au moins une couche intermédiaire entre celles-ci, la ou les couches intermédiaires consistant essentiellement en un mélange d'acide polylactique avec de l'alcool polyvinylique.

2. Films polymères selon la revendication 1, ayant une seule couche intermédiaire entre ladite première couche et ladite deuxième couche.

3. Films polymères selon la revendication 1, ayant au moins deux couches intermédiaires entre ladite première couche et ladite deuxième couche.

4. Films polymères selon la revendication 3, dans lesquels les quantités relatives d'acide polylactique avec l'alcool polyvinylique dans lesdites couches intermédiaires sont sélectionnées de façon que la proportion d'acide polylactique diminue dans des couches intermédiaires successives en commençant par la couche intermédiaire adjacente à ladite première couche.

5. Films polymères selon l'une quelconque des revendications précédentes, dans lesquels le ou les mélanges précités sont constitués chacun de 2 à 90% en poids d'acide polylactique, et de 98 à 10% en poids d'alcool polyvinylique.

6. Films polymères selon la revendication 2, dans lesquels ledit mélange contient de 40 à 95% en poids d'alcool polyvinylique et de 60 à 5% en poids d'acide polylactique.

7. Films polymères selon l'une quelconque des revendications précédentes, dans lesquels l'alcool polyvinylique a un degré d'hydrolyse de 79 à 96%.

8. Films polymères selon l'une quelconque des revendications précédentes, dans lesquels ladite deuxième couche contient de l'acide polylactique.

9. Films polymères selon l'une quelconque des revendications précédentes, dans lesquels ladite première couche forme une surface extérieure des films.

10. Films polymères selon l'une quelconque des revendications précédentes, dans lesquels lesdites première et deuxième couches ensemble forment les surfaces extérieures des films.

11. Films polymères selon l'une quelconque des revendications 1 à 9, ayant au moins une autre couche sur ladite deuxième couche.

12. Films polymères selon la revendication 11, dans lesquels ladite au moins une autre couche sur la deuxième couche est constituée essentiellement d'acide polylactique ou bien où ladite au moins une autre couche sur la deuxième couche comprend un mélange de dérivés de cellulose et d'acide polylactique.

13. Films polymères selon la revendication 11, dans lesquels une couche intermédiaire consistant essentiellement en un mélange d'acide polylactique et d'alcool polyvinylique est réalisée entre ladite deuxième couche et ladite au moins une autre couche.

14. Emballages comprenant un article, par exemple un matériau de plante fraîche emballé dans une atmosphère contrôlée, emballé dans un film selon l'une quelconque des revendications précédentes.
